# EUROPEAN PATENT APPLICATION

(11) **EP 3 820 012 A1**
(43) Date of publication of application: **12.05.2021**
(21) Application number: 19207392.2
(22) Date of filing: 06.11.2019
(51) Int. Cl.: H02J 3/38, H02J 13/00, H02J 3/00

(54) **METHOD AND SYSTEM FOR RECURSIVE DATA AGGREGATION**

(71) Applicant: ABB Schweiz AG, 5400 Baden (CH)
(72) Inventor: BIANCHI, Lorenzo, 52027 San Giovanni Valdarno (AR) (IT); MAZZIOTTI, Francesca, 55025 Montevarchi (AR) (IT)
(74) Representative: Mannucci, Michele

(57) **Abstract**

A method for recursive data aggregation in a system comprising a plurality of electronic devices and at least one data collecting unit is disclosed. The data collecting unit is adapted to receive data from said electronic devices. The method comprises receiving an incoming data feed of time-stamped data points at the data collecting unit. The incoming data feed comprises at least one incoming data stream. The incoming data stream comprises a plurality of time-stamped data points. The method further comprises aggregating data points of the incoming data feed, to generate a time series of ordered time-series aggregated data points, which is then cached. According to the aggregation method disclosed herein, when the data collecting unit receives a new incoming data point affecting an already cached time-series data point, a step of invalidating and re-evaluating said affected time-series is performed.

## Description

### TECHNICAL FIELD

The present disclosure relates generally to collection and aggregation of data. More specifically, embodiments disclosed herein concern methods and systems for collecting, aggregating and caching data in an aggregated electronic device system.

### BACKGROUND ART

Systems comprising a plurality of electronic devices in data communication with a data collecting unit exist in several industrial environments. Data from the electronic devices are usually available in form of data streams, each including a plurality of time-stamped data points. These require to be collected and aggregated in several manners, to provide aggregated data to a user.

Examples of such systems include, but are not limited to, distributed electric generators, which convert power from renewable energy resources into useful electric power. These systems may include photovoltaic panel fields, wind farms, small and micro hydro turbine generators, and the like. A plurality of electric power converters or inverters associated with photovoltaic panels, wind turbines or other electric power generating devices, are connected to an electric power distribution grid and provide electric power to the grid. Data on power production are collected on a timely basis from each converter or inverter by a data collecting unit. From the collected data, information on the power and energy generated by the plant over time can be calculated.

Time-stamped data points may include, for instance, data on (active or reactive) power production as a function of time. A data stream of time-stamped data points could in this case include a sequence of data, each representing the measured instant (active or reactive) power at a given point in time produced by the relevant converter or inverter. Aggregation of these data may involve calculating the total instant power produced by a plurality of inverters, or the mean power produced by an inverter over a period of time, the total energy produced in a time interval, or combinations of such aggregated data.

It would be desirable to provide a system which is capable of providing high-performance real time data aggregation and which is at the same time capable of rapidly providing valid data when changes in the operative conditions arise, that may affect previously aggregated and cached data.

### SUMMARY

Disclosed herein is a method for recursive data aggregation in a system comprising a plurality of electronic devices and at least one data collecting unit adapted to receive data from said electronic devices. The method includes a step of receiving one or more incoming data streams from at least one of said electronic devices at the data collecting unit. In general, the data collecting unit can receive one or more incoming data streams from each electronic device.

Each incoming data stream if formed by or includes a sequence of time-stamped data points. Each time-stamped data point comprises a piece of information relating to a respective electronic device. The piece of information can be a time-varying information, e.g. a time-variable physical operational parameter of the electronic device. The term time-variable parameter, or time varying parameter, as used herein means a parameter, the value whereof is subject to change over time. Each time-stamped data point of a data stream can therefore be or include the combination of the measured value of a parameter and the time and date at which the parameter was measured, i.e. the time at which the parameter was sampled.

In general terms, the data collecting unit may receive, from one or more of said electronic devices, a plurality of data streams, collectively forming a data feed. Generally speaking, a data feed can be or include one or more data stream, the data points whereof shall be aggregated according to a given function as explained later on. If the data feed is formed by a plurality of data streams, these latter can originate from only one electronic device, or from a plurality of electronic devices.

The method further comprises the step of ordering the time-stamped data points of each data stream according to their respective time stamps. Time-stamped data points can reach the data collecting unit in the correct time sequence, or they may be received in a timely non-ordered fashion. Prior to performing further steps, therefore, the data points are put in a time-ordered sequence based on the respective time stamps.

The method further comprises the step of aggregating the timely ordered time-stamped data points of the data streams collectively forming a data feed using an aggregation function. The aggregation step generates at least one time series of ordered and aggregated data points. The ordered and aggregated data points will be referred to herein after also as "time-series data points", or "time-series aggregated data points". Once the aggregated data points have been calculated, they are cached and made available to a user, for instance.

If, once the time series of time-series aggregated data points has been calculated and cached, a data point having an earlier data stamp and belonging to one of the incoming data streams (i.e. to the data feed) used to generate the time-series aggregated data points, is received at the collecting unit, the following is performed. Those time-series aggregated data points, the value whereof is affected by the newly incoming data point, are invalidated. Only the invalidated time-series data points are calculated anew, i.e. re-evaluated, based on data points of the respective data feed, including the newly incoming data point(s).

The newly calculated time-series data point(s) is(are) introduced in the relevant time series, replacing the previously invalidated time-series aggregated data point. The time series of time-series aggregated data points will thus be updated, taking the newly incoming data point into consideration. Those time-series aggregated data points which are not affected by the newly incoming data point will not be calculated anew.

An efficient method for recursive data collection and aggregation is thus obtained.

According to some embodiments, time-series aggregated data points of the at least on time series can be calculated using a horizontal aggregation function. A horizontal aggregation function can be a function, wherein a plurality of time-stamped data points falling within a given time interval are combined to one another to provide a time-series aggregated data point. In other words, each time-series aggregated data point obtained using a horizontal aggregation function is the result of a combination, according to a given function, of a plurality of time-stamped data points falling in a time interval. I.e. a horizontal aggregation function is a function, which combines to one another time-stamped data points belonging to, i.e. falling within, a given time interval.

According to other embodiments, time-series aggregated data points of the at least one time series can be calculated using a vertical aggregation function. A vertical aggregation function is a function, wherein a plurality of time-stamped data points belonging to different data streams of a data feed, and falling within a given time interval or having the same time stamp, are combined to one another to obtain a time-series aggregated data point. In other words, each time-series data point obtained using a vertical aggregation function is the result of a combination, according to a given function, of a plurality of time-stamped data points, originated from a plurality of data streams, having the same, or substantially the same time stamp. I.e. a vertical aggregation function is a function which combines to one another time-stamped data points belonging to different data streams of a data feed, and having the same or substantially the same time stamp, i.e. falling within a time interval centered on a given time instant, which is sufficiently narrow to consider the data points as being simultaneous.

Horizontal and vertical aggregation functions can be combined to one another to generate a time series of time-series aggregated data points originating from a plurality of data streams, combined according to a vertical aggregation function and a horizontal aggregation function. Vertical aggregation and horizontal aggregation can be performed in sequence in any order.

For instance, data points from a plurality of data streams may be combined according to a vertical aggregation function first, to generate an intermediate time series. Applying a horizontal aggregation function to the intermediate time series can result in one or more time series of vertically and horizontally aggregated time-series aggregated data points.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a schematic of a solar plant wherein the method of the present disclosure can be implemented;
Fig.2 illustrates a diagram plaining the processing of incoming data streams collected by a collecting unit to generate time series of aggregated data points;
Fig.3 illustrates a diagram showing a vertical data aggregation procedure;
Fig.4 illustrates a diagram showing a horizontal data aggregation procedure;
Figs. 5 and 6 illustrate diagrams similar to Figs. 3 and 4 when a newly incoming data points require invalidation and recalculation of aggregated data points in a time series;
Fig.7 illustrates a diagram showing a combined vertical and horizontal aggregation procedure;
Fig. 8 illustrates the diagram of Fig.7 in case of newly incoming data points requiring invalidation and recalculation of aggregated data points in a time series.

### DETAILED DESCRIPTION

The following detailed description of embodiments specifically refers to power generation plants using renewable energy sources, such as photovoltaic solar plants using photovoltaic panels to collect solar radiation and generate electric power therefrom. Nevertheless, those skilled in the art of data collection and aggregation in distributed electronic device systems will understand that novel features disclosed herein may be applied with advantage also to other electronic device systems.

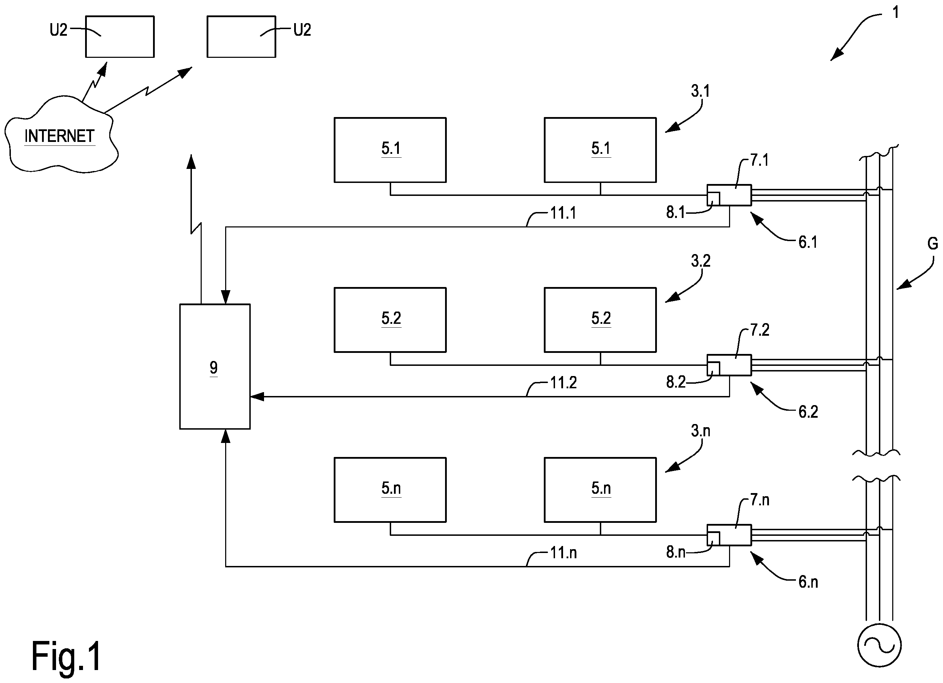

Fig.1 illustrates a schematic of a photovoltaic solar plant 1. The photovoltaic solar plant 1 comprises a plurality of clusters or arrays 3 of photovoltaic panels, each including one or more photovoltaic panels 5. More specifically, in Fig.1 a first cluster 3.1 comprises two photovoltaic panels 5.1, a second cluster 3.2 comprises two photovoltaic panels 5.2 and an n^{th} cluster 3.n comprises two photovoltaic panels 5.n. While in the schematic of Fig.1 each array 3 comprises the same number of photovoltaic panels, it shall be understood that this is by way of example only and that panel arrays of the same photovoltaic solar plant 1 may include a variable number of panels.

Each cluster 3 (3.1, 3.2, .... 3.n) comprises an inverter 7. More specifically, clusters 3.1, 3.2, ... 3.n comprise inverters 7.1, 7.2, .... 7.n, respectively. Each inverter converts DC electric energy generated by the respective photovoltaic panels into AC electric energy, which can be distributed through an electric energy distribution grid G, to which the inverters 7 are electrically connected.

Each cluster 3 of photovoltaic panels 5 is adapted to generate power, which may vary over time. Respective control units embedded in or associated with the inverters 7, and schematically shown at 8 (8.1, 8.2, ... 8.n), may collect and transmit data on energy and power generation, or on other time-varying physical operational parameters of the photovoltaic panels or of any device, apparatus or system associated therewith, such as the inverter or converter 7 itself. The data can be calculated based on values of physical parameters, such as electric parameters, detected through suitable sensors or probes, not shown. For instance, the output voltage and output current at the output terminals of each inverter 7 can be detected and power or energy production data can be calculated therefrom. Other physical parameters of interest may involve for instance the temperature of one or more components of the arrays of photovoltaic panels and relevant inverters or converters, or operational parameters of any nature, for instance the rotational speed of cooling fans and the like, grid frequency, wind speed, especially in case of wind turbines used as energy sources different from photovoltaic panels.

The control units 8 are in data communication relationship with a data collecting unit 9. For instance, a wireless (radio) or a wired connection can be provided to transfer data from each electronic device including the control unit 8.1 , 8.2, ... 8.n to the data collecting unit 9 and vice-versa. The connection channel is schematically shown at 11.1, 11.2, ... 11.n, respectively.

The system 1 shown in Fig.1 therefore includes the data collecting unit 9 in data communication relationship with a plurality of electronic devices, each of which can include the respective control unit 8 and the inverter 7. The electronic devices will be referred to hereinafter also with reference number 6 (6.1, 62, ... 6.n).

Each electronic device 6 can generate one or more data streams. As used herein, a "data stream" is a sequence of time-stamped data points. As used herein, a time-stamped data point in a data stream can be the value at a certain instant in time of a time-varying parameter or function, or the value of a function calculated at a time instant or over a time interval. More generally, a time-stamped data point contains a time-varying information, such as the value of an electric or physical parameter. A time stamp is associated to the time-related information, to identify the instant in time at which the information has been obtained, e.g. the time instant at which the parameter value has been sampled.

Thus, as used herein, a "time-stamped data point" in a data stream may be generally a datum or piece of information, which is characterized by a time stamp that indicates the instant in time at which the datum has been sampled. Data points may contain one or more electric or electronic measures, such as a voltage value, a current value, a power value, as well as measures of other physical parameters, or a combination thereof, at a given instant in time.

Hereinafter data streams will also be referred to with the acronym DS and time-stamped data points in a data stream will be referred to with the acronym DP.

The time-stamped data points of a data stream may be received by the data collecting unit 9 in a time-ordered manner, but this is neither essential nor mandatory. In some cases, the data simply cannot be received in a time-ordered manner due to some kind of disturbance factor, for instance. E.g: in some circumstances the data points can be received by the data collecting unit 9 in a sequence which is not time-ordered, i.e. earlier sampled data may be received later than later sampled data. For example, transmission of earlier data may be delayed due to temporary unavailability of the transmission channel and such earlier data may be transmitted at a later stage, when the transmission channel is available again and once later data have been transmitted with priority over the earlier, delayed data.

The time-stamped data points DPs of a data stream DS usually need to be aggregated in time intervals according to specific aggregation functions. Ordered and aggregated data points form a time series.

A time series will be referred hereinafter also with the acronym TS. The ordered and aggregated data points of a time series will be referred to hereinafter also with the acronym TSDPs (Time-Series Data Points). In some circumstances, time-stamped data points DPs of more than one data stream DS may be aggregated in time intervals to generate a single time series TS, i.e. multiple data streams DSs may contribute to a single time series TS. All the data streams (DSs) contributing to build a time series TS will be referred hereinafter as a "feed" for said time series TS.

Typically, for instance, in a solar power generation system 1 as shown in Fig.1, a sequence of data representing the instant power of the entire system will represent a time series TS, the calculation whereof requires data streams DSs from each inverter 7.1, 7.2, ... 7.n, i.e. a total number of n data streams DSs.

Time series TSs may be generated by recursively aggregating data points DPs of one or more data streams DSs according to variable time intervals, i.e. from shorter to longer time intervals. In this way, multiple aggregated time series TSs with different data granularity can be generated with just one run.

The rate at which time-stamped data points DPs in data streams DSs are received by the data collecting unit 9 can be fixed or variable.

The time-stamped data points DPs can be aggregated against time or against data streams to form respective data streams TSs. Aggregation of time-stamped data points DPs against time will be referred to hereinafter as "horizontal aggregation". Aggregation of time-stamped data points DPs against data streams will be referred to hereinafter as "vertical aggregation".

More specifically, and as will become clearer form the detailed description of exemplary embodiments disclosed below, a horizontal aggregation involves combining a plurality of data points DPs contained in a given time interval, to generate a single data point DP of a time series TS. Vertical aggregation involves combining data points DPs of a plurality of data streams DSs into a single time series TS.

As soon as the time-stamped data points DPs received by the data collecting unit 9 are aggregated, i.e. as soon as the aggregated data points DPs have been calculated, the aggregated data points DPs are cached. If a new time-stamped data point DPs, which contributes to the already aggregated data points DPs of a time series TS, reaches the data collecting unit 9, only those aggregated data points DPs of the data stream DS will be invalidated and recalculated, which are affected by the newly received data point DP, while the remaining aggregated data points DPs of the relevant data stream DS remain valid.

The above summarized concept will be explained in greater detail hereinafter, reference being made to the enclosed diagrams.

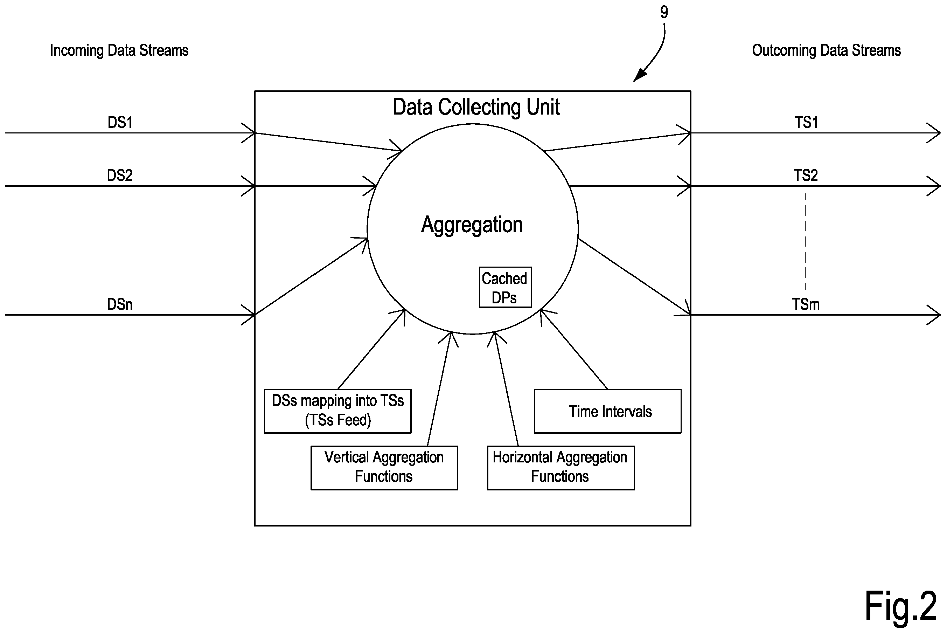

With continuing reference to Fig.1, the diagram of Fig.2 schematically illustrates the data collecting unit 9, a plurality of incoming data streams DS (DS1, DS2, .. DSn), and a sequence of outcoming time series TS1, TS2, .... TSn. The time series are built using the time series feeds (one or more incoming data streams), a vertical aggregation function and/or a horizontal aggregation function and relevant time intervals. The incoming data streams DS1, DS2 ... DSn are sequences of data (time-stamped data points DPs) incoming from the various electronic devices 6.1, 6.2, ...6.n. The outcoming time series TS1, TS2, ... TSm are sequences of recursively aggregated data points DPs. The time series TS1, TS2, ... TSm may be transmitted to a user U1, U2 upon request by such user. The users U1, U2 can connect to the data collecting unit 9 for instance through an internet connection, as schematically shown in Fig.1.

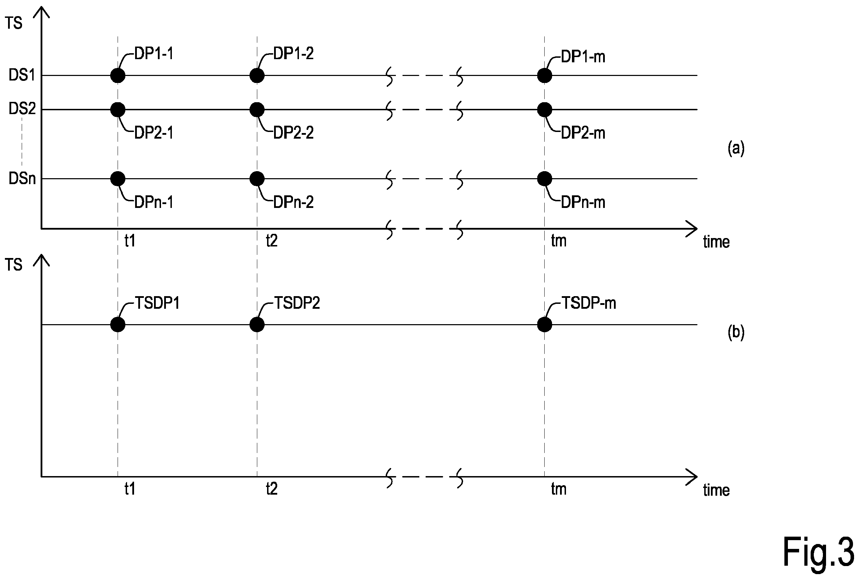

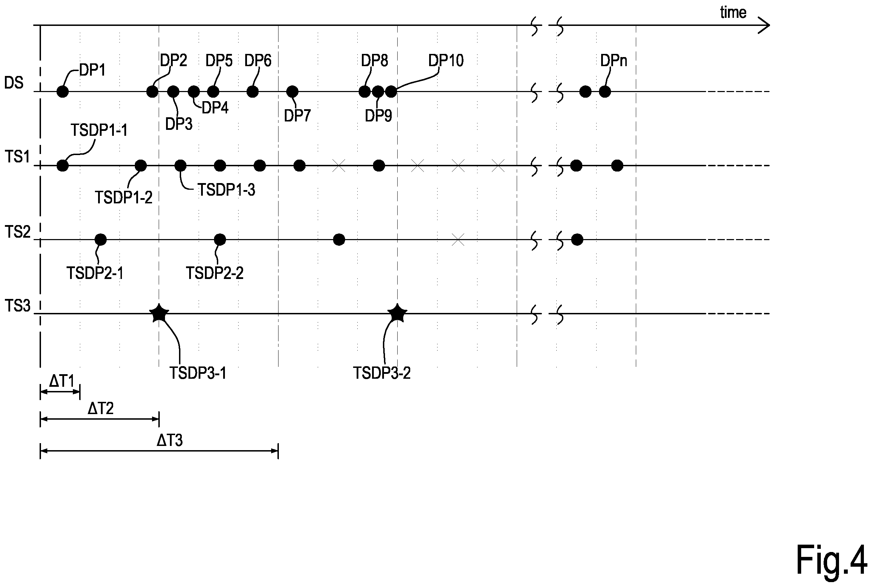

With continuing reference to Figs. 1 and 2, Figs. 3 and 4 are diagrams which pictorially illustrate a vertical data aggregation (Fig.3) and a horizontal aggregation (Fig.4) of time-stamped data points DPs from one or more incoming data series DSs, to obtain outcoming time series TSs of aggregated data points DPs.

More specifically, referring first to Fig.3, in the first diagram (a) time is plotted on the horizontal axis (abscissa) and a plurality of data series DS1, DS2, ... DSn are aligned along the vertical axis (ordinate). In the exemplary embodiment of Fig.3(a), therefore, each i-th data stream DSi contains a time-stamped data point DPi-1 at instant t1, a further time-stamped data point DPi-2 at instant t2, a further data point Dpi-j at instant tj, and so on. It shall be understood that in general, one or more data streams may lack a time-stamped data point at one or more time instants t1, t2, .. tm.

As mentioned above, a vertical aggregation of data is one where the data points DPs of several incoming data streams DS1, DS2, ... DSn are aggregated against data streams, i.e. data points DPs of a plurality of incoming data streams DSs are combined in a single stream or time series of timely ordered time-series data points TSDPs. The process of vertical aggregation is pictorially shown in Fig.3(a) and 3(b); in the diagram of Fig.3(b) time is again plotted on the abscissa and a time series TS is plotted on the ordinate, the time series TS being obtained by vertical aggregation of data points DPs from the data streams DS1, DS2, ... DSn (Fig.3(a)) at each instant in time (t1, t2, ... tm).

More specifically, in the diagram of Fig.3(b) at time instant t1 an aggregated data point (TSDP1) of the time series TS is plotted along the line representing the time series TS. The TSDP1 is obtained by the aggregation of the DPs at time instant t1 of the plurality of data streams DS1, DS2, ... DSn. Aggregation can be obtained using any suitable aggregation function as requested. For instance, the TSDP1 at instant t1 can be calculated as a mean value of DPs of the several DSs (DS1, DS2, .... DSn) at instant t1, i.e. DP1-1, DP2-1, DPn-1, and so on. Alternatively, the time-series data points (TSDP) of the time series TS can be calculated as the sum of the DP from the several DSs of the feed (i.e. DS1, DS2, ... DSn).

Referring to the exemplary photovoltaic solar power plant 1 of Fig.1, the time-stamped data points DPs of Fig. 3(a) can include measurements of instant active power generated by the respective inverter. Thus, data stream DS1 may include instant active power generated by inverter 7.1 and sampled at time instants t1, t2, ..... tm; data stream DS2 may include instant active power generated by inverter 7.2 and sampled at time instants t1, t2, ..... tm; finally data stream DSn may include instant active power generated by inverter 7.n sampled at time instants t1, t2, ..... tm. Power values from each inverter can be aggregated by summing them to obtain the total instant power generated by the plant 1 at each time instant t1, t2, .... tm. The time series TS will in such case include time-series data points TSDP, each of which contains the total power generated at a given instant in time by all the inverters 7 together.

Alternatively, the mean value of DPj-1, DPj-2, DPj-n can be calculated at each time instant tj to obtain a time series representing the mean power generated per inverter at each time instant tj. From the same feed DS1, DS2, ... DSn, two or more time series TSs can also be obtained, using different vertical aggregation functions, e.g. a time series of total power values and a time series of mean power values per inverter.

The diagram of Fig. 4 provides a pictorial representation of a horizontal aggregation of time-stamped data points DPs from a single data stream DS. In the diagram of Fig. 4 time is plotted on the horizontal axis. Horizontal aggregation of data involves the combination (aggregation) of several time-stamped data points DPs falling within a certain time interval to obtain a new aggregated data point TSDP of the respective time series TS. A single time interval or several time intervals can be used, of increasing duration, for instance. In Fig.4 the horizontal time axis is divided into three different time intervals of variable duration. More specifically, the time intervals are labeled ΔT1, ΔT2 and ΔT3. In the example shown in Fig.4, the time interval ΔT2 is three times longer than time interval ΔT1 and the time interval ΔT3 is twice the time interval ΔT2. It shall be understood the time partition shown in Fig.4 is by way of example only.

The data stream DS contains a plurality of time-stamped data points DPj (with j=1 to n). These data points DP are not necessarily distributed uniformly over time. Rather, each time interval may contain none, one or some data points DP. The first and third time intervals ΔT1 contain one data point DP each (shown at DP1 and DP2), the second time interval ΔT1 contains no data point and the fourth time interval ΔT1 contains two data points DP (DP3, DP4).

In the diagram of Fig.4 three time series TSs of horizontally aggregated data points (Time-Series Data Points: TSDPs) are plotted by way of example. The three time series are labeled TS1; TS2 and TS3, respectively. The first time series TS1 contains aggregated data points TSDPs aggregated by time interval ΔT1. This means that in each time interval ΔT1 the time series TS1 contains a data point TSDP which is calculated by aggregating the data points DPs contained in the ordered data stream DS within the corresponding time interval ΔT1. For instance in the first time interval ΔT1 the time series TS1 contains a time-series data point TSDP1-1, which corresponds to DP1. In the second time interval ΔT1 the time series TS1 contains no data point. In the third time interval tΔT1 he time series TS1 contains a data point TSDP1-2, which corresponds to DP2. In the fourth time interval ΔT1 the time series TS1 contains a data point TSDP3, which is an aggregation of DP3 and DP4, i.e. the two data points of the data stream DS contained in the fourth Δ time interval T1. Also in this case the time-series aggregated data point TSDP3 can be obtained by any suitable and desired horizontal aggregation function. For instance TSDP1-3 can be the sum of data points DP3, DP4, or else the mean value thereof, or any other combination or function thereof.

The second time series TS2 is based on aggregation of data according to time interval ΔT2, i.e. in each j-th time interval ΔT2, the time series TS2 contains a time-series data point TSDP2-j, which is obtained by aggregation (through a suitable horizontal aggregation function) of all data points DPs of data stream DS falling within the corresponding j-th time interval ΔT2. For instance TSDP2-1 is a time-series data point obtained by the aggregation of DP1 and DP2; TSDP2-2 is a time-series data point obtained by the aggregation of DP3, DP4, DP5 and DP6, etc..

Turning to the third time series TS3, the first time-series data point TSDP3-1 thereof is obtained by the aggregation of data points DP1, DP2, DP3, DP4, DP5, DP6 of the data stream DS which fall within the first time interval ΔT3. The second time-series data point TSDP3-2 is obtained by aggregating data points DP7, DP8, DP9, DP10, which fall in the second time interval ΔT3, etc..

Turning back to Fig.1, the horizontal aggregation function described above in connection with Fig.4 may be used to calculate the mean power generated by a given inverter 7 during each time interval ΔT1, ΔT2, ΔT3. For instance the first time interval ΔT1 may have a duration of 5 minutes. TSDP1-1, TSDP1-2, TSDP1-3 etc. represent the mean value of the power generated by the inverter 7 during each 5-minutes time interval ΔT1. Similarly, the second time interval ΔT2 may last 15 minutes. TSDP2-1, TSDP2-2 etc. represent the mean value of the power generated by the inverter during each 15-minutes time interval. Finally, the third time interval ΔT3 may last 30 minutes. TSDP3-1, TSDP3-2 etc. represent the mean value of the power generated by the inverter during each 30-minutes time interval.

When the data streams DS are received by the data collecting unit 9, this latter is adapted to calculate the time series as required, using the respective feeds, horizontal aggregation functions, vertical aggregation functions and time intervals as described above.

As soon as time-series data points TSDP of a time series TS have been calculated, they can be cached and made available for transmission to a user U1, U2. Thus, time series TSs are generated immediately, upon receipt of the data points DPs required for the calculation of the respective time series data points TSDPs. This procedure makes the time series TSs readily available upon receipt of the relevant data streams DSs.

As mentioned above, situations may occur, wherein one or more data points DPs from a data stream DS, which affect the calculation of aggregated data points (i.e. time-series data points TSDPs), are received at the data colleting unit 9 after the aggregated data points (i.e. time-series data points TSDPs) of the relevant time series TS have been calculated and cached already.

A method is disclosed herein, which allows invalidation and re-calculation of only those already cached data points DPs in the time series TSs, which are affected by the newly incoming data points DPs reaching the data collecting unit 9. For instance the newly incoming data points DPs may refer to data sampled earlier than those already used in the aggregation of data points to calculate the time-series data points TSDPs, but the transmission whereof to the collecting unit 9 has been delayed, for some reason. Such situations may occur for instance when a transmission channel is temporarily unavailable, or if one of the devices from which data points DPs shall be collected is temporarily inactive or unable to transmit the collected time-stamped data points DPs.

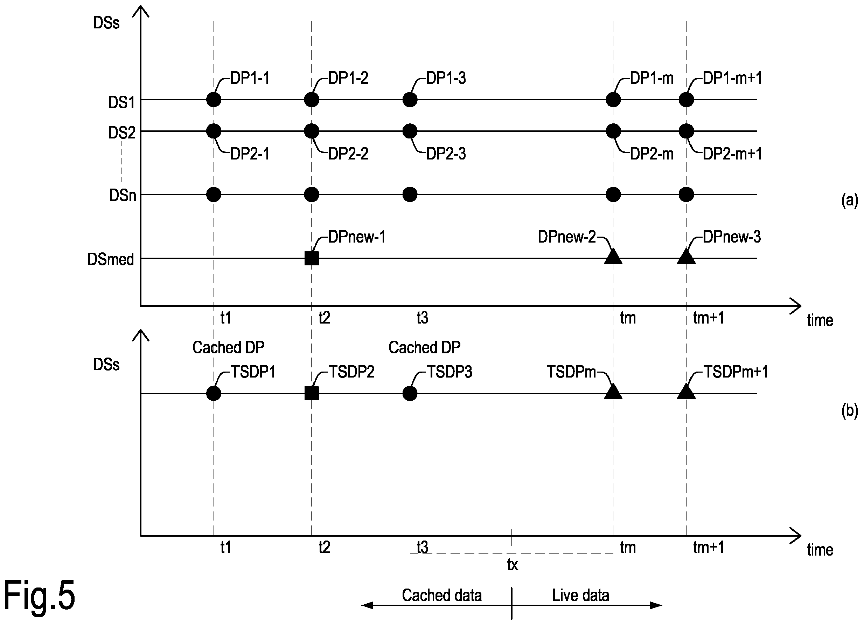

For a better appreciation of the method disclosed herein in case of vertical aggregation, reference can be made to Fig.5, with continuing reference to Fig. 3. The diagram of Fig.5 corresponds to the diagram of Fig.3, but contains an additional data stream DSnew, which is added to data streams DS1, DS2, ... DSn forming the feed for the calculation of the aggregated data points TSDPs forming the time series TS. In Fig.5 it is assumed that data preceding time instant tx have already been cached (these data are labeled as "cached data") and data after time instant tx have not been cached yet. These latter are labeled as "live data".

Let's assume that the new data stream DSnew is received at the data collection unit 9 at instant tx and contains a sequence of time-stamped data points DPs, whereof the first one, labeled DPnew-1 has a time stamp earlier than tx, namely is time-stamped at t2 and thus affects the calculation of the aggregated data point TSDP2 in time series TS.

This requires the previously calculated and cached data point TSDP2 to be invalidated and calculated anew. However, the remaining and already cached data points TSDP1, TSDP3 of the time series TS remain valid. The subsequent data points TSDPm and TSDPm+1 have not been calculated and cached yet at time instant tm, and can be calculated and cached including the DPnew-2 and DPnew-3 data points into the aggregation.

In summary: when the new data stream DSnew is added, only those time-stream data points TSDPs of the time series TS are recalculated, which are actually affected by data points (DPnew-1, in the example) contained in data stream DSnew.

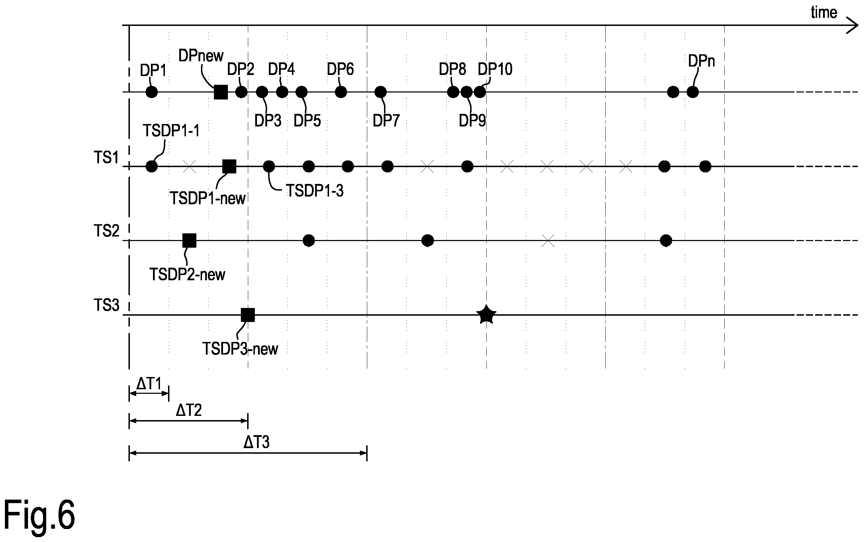

The same concept of invalidation and recalculation of time-series data points TSDPs can be used in case of horizontal aggregation. This is explained hereinafter, reference being made to Fig.6 with continuing reference to Fig.4, described above.

Fig.6 illustrates the same diagram of Fig.4, but the ordered data stream DS contains an additional data point DPnew, which has been added after the TSDP data points of time series TS1, TS2, TS3 have been calculated and cached already. More specifically, the newly added data point of data stream DS falls in the third interval ΔT1, in the first interval ΔT2 and in the first interval ΔT3. Therefore, the newly added data point DP-new affects some of the aggregated and already cached time-series data points TSDPs of the time series TS1, TS2 and TS3. More specifically, the newly added data point DPnew affects calculation of TSDP1-2, i.e. the aggregated data point (time-series data point TSDP) in the third interval ΔT1 of time series TS1, and the first TSDP of the TS2 and of the TS3 time series, respectively. These previously calculated and cached time-series data points TSDPs are invalidated, calculated anew by including the newly added data point DPnew in the aggregation, and cached again. The recalculated and newly cached data point in time series TS1 is labeled TSDP1-new; the recalculated and newly cached data point in time series TS2 is labeled TSDP2-new; and the recalculated and newly cached data point in time series TS3 is labeled TSDP3-new.

The remaining data points TSDP of the time series TS1, TS2, TS3 remain unaltered.

In the previously described examples, data streams DSs are aggregated either horizontally or vertically. However, it is also possible to provide more complicated situations, where data streams are combined by using vertical aggregation functions and horizontal aggregation functions in sequence, such that incoming data points DPs are aggregated against time and against data streams to obtain horizontally and vertically aggregated data organized into outcoming time series TSs.

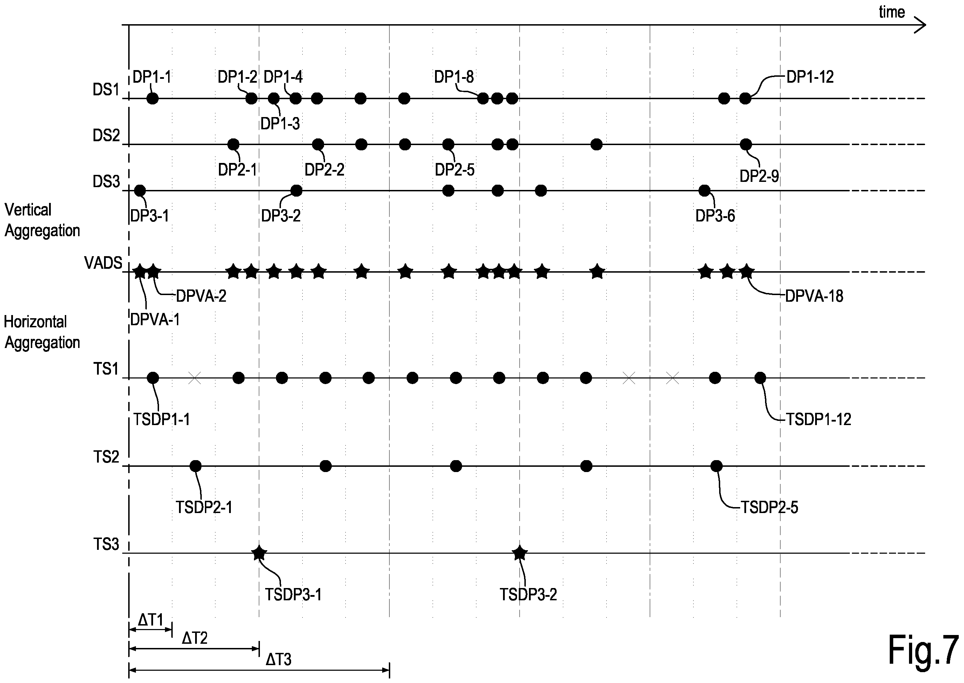

A combined situation of horizontal and vertical aggregation is illustrated in Fig.7. Here, the horizontal data aggregation is performed according to time intervals of increasing duration, labeled again ΔT1, ΔT2 and ΔT3, and corresponding to those described above in connection with Fig.6.

In the exemplary embodiment of Fig.7 data from three data streams DS1, DS2 and DS3 are firstly aggregated vertically to obtain a data stream of vertically time-series aggregated data points. Next, the data points of the data stream resulting from vertical aggregation of data streams DS1, DS2 and DS3 are aggregated horizontally to obtain three time series TS1, TS2 and TS3 of vertically and horizontally aggregated data, wherein the horizontal aggregation is performed according to three time intervals ΔT1, ΔT2 and ΔT3 of different duration, as described above.

More specifically, in the embodiment of Fig.7 a feed comprised of three data streams DS1, DS2 and DS3 is used to obtain three time series TS1, TS2 and TS3 of aggregated data. It shall be understood, that in other embodiments the number of feeds can be different from the number of time series.

Data stream DS1 contains time-stamped data points DP1-1, DP1-2, .... DP1-12. Data stream DS2 contains time-stamped data points DP2-1, DP2-2, .... DP2-9. Finally, data stream DS3 contains time-stamped data points DP3-1, DP3-2, ... DP3-6.

A first operation performed on the data streams DS1, DS2 and DS3 involves vertical aggregation, which results in a data stream of vertically aggregated data points labeled VADS (Vertically Aggregated Data Stream). Based on the vertical aggregation of data points from the three data streams DS1, DS2, DS3, the vertically aggregated data stream VADS contains eighteen data points, labeled from DPVA-1 to DPVA-18. Vertical aggregation is performed as described above in connection with Fig.3.

The vertically aggregated data points of data stream VADS can be aggregated horizontally with a procedure as described above in connection with Fig.4. Since, in the exemplary embodiment described herein, the data are aggregated according to three time intervals of increasing duration, three time series TS1, TS21 and TS3 are obtained, each horizontally aggregating the data points DPVA-j (J=1 to 18) from data stream VADS according to the respective time interval, namely ΔT1, ΔT2 and ΔT3, respectively. The first time series TS1 contains twelve horizontally aggregated data points labeled from TSDP1-1 to TSDP-12. The second time series TS2 contains five horizontally aggregated data points labeled TSDP2-1 to TSDP-5. The third time series TS3 contains two horizontally aggregated data points labeled TSDP3-1 and TSDP2. The number of data points in each data stream DSs and in each time series is by example only.

While according to Fig.7 a process of vertical aggregation is followed by a process of horizontal aggregation, an opposite sequence can be envisaged, wherein: horizontal aggregation is performed first based on one or more data streams, followed by a vertical aggregation.

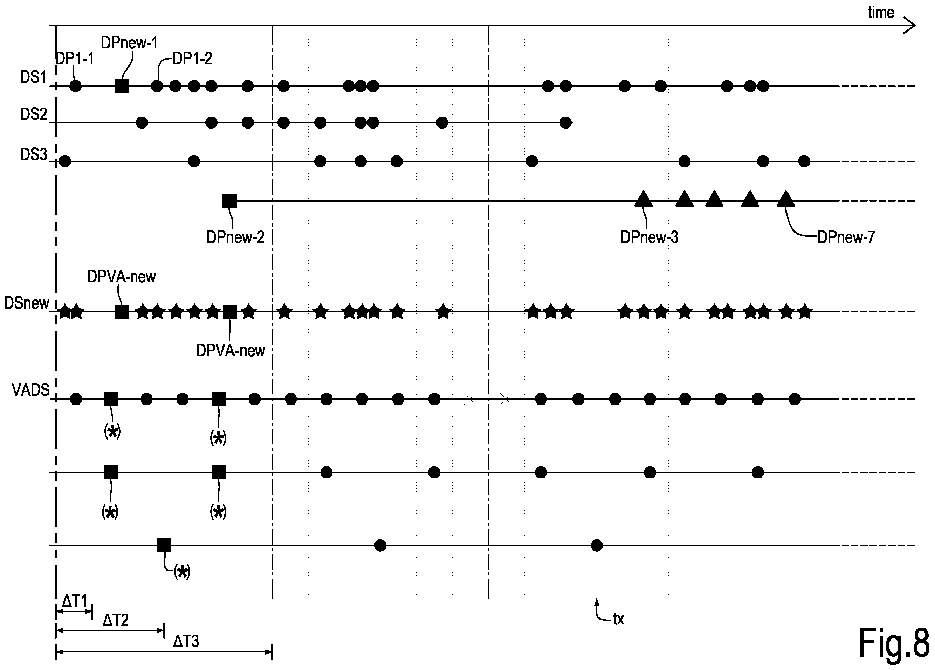

Fig.8 illustrates what happens in the scenario of a combined vertical and subsequent horizontal aggregation as depicted in Fig.7, when new data points and/or data streams are added once the data points of the time series TS1, TS2 and TS3 have been calculated and cached already.

In Fig.8 the same reference numbers are used to designate the same elements of Fig.7. Thus, in the upper portion of the diagram of Fig.8 three data streams DS1, DS2 and DS3 are illustrated, each including data points DP, followed by a vertically aggregated data stream VADS formed by vertically aggregated data points labeled DPVA. Three time series TS1, TS2 and TS3 are generated by horizontal aggregation of data points belonging to the vertically aggregated data stream VADS according to three different time intervals ΔT1, ΔT2, ΔT3. This is the same as described in relation to Fig.7.

However, in the situation depicted in Fig.8, after aggregation and caching of the previously mentioned data points DP1-1 through DP3-6, a new data point DPnew-1 is added in the first data stream DS1. Further, a new data stream DSnew is also added, which contains data points DPnew-2 to DPnew-7. The new data stream DSnew belongs to the same feed of data streams DS1, DS2 and DS3, i.e. is used to calculate VADS. The data points DPnew-1 and DPnew-2 fall within the time intervals prior to tx and therefore they affect the calculation of already aggregated and cached data points, while DPnew-3 to DPnew-7 do not affect already cached data, as they arrive after tx.

More specifically, the time stamp of new data point DPnew-1 indicates that such data point falls within the second time interval ΔT1, and is temporally located between data point DP1-1 and DP1-2 of the first data stream DS1. The new data stream DSnew contains a time-stamped data point DPnew-2, which is temporally located in the fifth time interval ΔT1. The time-stamped data points DPnew-3 through DPnew-7 are received by the data collecting unit 9 in time intervals following time instant tx, for which aggregation and caching of data points have not yet been performed, i.e. they belong to time intervals for which neither the vertical nor the horizontal aggregation has been executed yet.

Consequently, the newly added data point DPnew-1 of the first data stream DS1 and the first data point DPnew-2 of the new data stream DSnew affect some of the already aggregated and cached data points, while the remaining data points DPnew-3 through DPnew-7 do not.

More specifically, the first newly added data point DPnew-1 falls in the second time interval ΔT1, and affects the vertical aggregation of data in said time interval with the addition of a new data point in the vertically aggregated data stream VADS. Such new data point in vertically aggregated data stream VADS is labeled DPVA-new. Consequently the horizontal aggregation of data in the second time interval ΔT1, in the first time interval ΔT2 and in the first Δ time interval T3 of first, second and third time series TS1, TS2 and TS3 are also affected. The time series data points TSDPs affected by newly added data point DPnew-1 are invalidated and recalculated taking into account the newly added data point DPnew-1.

Similarly, the DPnew-2 data point contained in the new data stream DSnew added in the fifth ΔT1 time interval causes addition of a new data point in the vertically aggregated data stream VADS as well as invalidation and recalculation of the data point falling in the fifth time interval ΔT1 of time series TS1 and the data point falling in the second time interval ΔT2 of the time series TS2.

The recalculated data points of time series TS1, TS2 and TS3 are marked with an asterisk (*).

As can be understood from the diagram of Fig. 8, data points from incoming data streams DS can be vertically and/or horizontally aggregated and cached to generate outcoming time series TS as soon as the data are received at the data collecting unit 9. The aggregated data points TSDPs can be cached as soon as they have been calculated. This increases the performance of the method since the system can immediately provide aggregated data on a specific time interval upon request, without the need for re-performing data aggregation. Cached data points are invalidated and re-evaluated (recalculated) only if a new data point contributing to the aggregated data is received. I.e. if new time-stamped data points reach the data collection unit 9 after caching of the aggregated data, only those aggregated data points TSDPs are recalculated, which are affected by the newly entering time-stamped data points DPs. This results in efficient data collection, aggregation and caching. The aggregation method thus obtained is solid and still valid when conditions change, such as when new data points DPs or data streams DSs are incoming.

While the invention has been described in terms of various specific embodiments, it will be apparent to those of ordinary skill in the art that many modifications, changes, and omissions are possible without departing form the spirit and scope of the claims. In addition, unless specified otherwise herein, the order or sequence of any process or method steps may be varied or re-sequenced according to alternative embodiments.

## Claims

1. A method for recursive data aggregation in a system comprising a plurality of electronic devices and at least one data collecting unit adapted to receive data from said electronic devices; the method comprising the following steps:
receiving an incoming data feed of time-stamped data points at said data collecting unit, wherein said incoming data feed comprises at least one incoming data stream, and wherein said at least one incoming data stream comprises a plurality of time-stamped data points;
for each data stream, order the respective time-stamped data points according to their time-stamps;
aggregating data points of said incoming data feed to generate at least one time series of ordered time-series aggregated data points;
caching the time-series aggregated data points; and
when the data collecting unit receives a new incoming data point affecting at least one of said cached time-series aggregated data points, invalidating and re-evaluating said at least one affected time-series aggregated data point.

2. The method of claim 1, wherein the time-series aggregated data points of said at least one time series are calculated using a horizontal aggregation function.

3. The method of claim 1, wherein the time-series aggregated data points of said at least one time series are calculated using a vertical aggregation function.

4. The method of claim 1, wherein the time-series aggregated data points of said at least one time series are calculated using a combination of a horizontal aggregation function and a vertical aggregation function.

5. A machine-readable medium having stored thereon instructions, which if performed by a machine cause the machine to perform a method comprising:
receiving an incoming data feed of time-stamped data points at said data collecting unit, wherein said incoming data feed comprises at least one incoming data stream, and wherein said at least one incoming data stream comprises a plurality of time-stamped data points;
for each data stream, order the respective time-stamped data points according to their time-stamps;
aggregating data points of said incoming data feed to generate at least one time series of ordered time-series aggregated data points;
caching the time-series aggregated data points; and
when the data collecting unit receives a new incoming data point affecting at least one of said cached time-series aggregated data points, invalidating and re-evaluating said at least one affected time-series aggregated data point.

6. The machine-readable medium of claim 5, wherein the time-series aggregated data points of said at least one time series are calculated using a horizontal aggregation function.

7. The machine-readable medium of claim 5, wherein the time-series aggregated data points of said at least one time series are calculated using a vertical aggregation function.

8. The machine-readable medium of claim 5, wherein the time-series aggregated data points of said at least one time series are calculated using a combination of a horizontal aggregation function and a vertical aggregation function.

9. A system comprising a plurality of electronic devices, in data communication relationship with a collecting unit; wherein each electronic device is adapted to transmit data series of time-stamped data points through a transmission channel to the collecting unit; and wherein the collecting unit is adapted to perform a method comprising the following steps:
receiving an incoming data feed of time-stamped data points from at least one of said electronic devices, wherein said incoming data feed comprises at least one incoming data stream, and wherein said at least one incoming data stream comprises a plurality of time-stamped data points;
for each data stream, order the respective time-stamped data points according to their time-stamps;
aggregating data points of said incoming data feed to generate at least one time series of ordered time-series aggregated data points;
caching the time-series aggregated data points; and
when the data collecting unit receives a new incoming data point affecting at least one of said cached time-series aggregated data points, invalidating and re-evaluating said at least one affected time-series aggregated data point.

10. The system of claim 9, wherein the time-series aggregated data points of said at least one time series are calculated using a horizontal aggregation function.

11. The system of claim 9, wherein the time-series aggregated data points of said at least one time series are calculated using a vertical aggregation function.

12. The system of claim 9, wherein the time-series aggregated data points of said at least one time series are calculated using a combination of a horizontal aggregation function and a vertical aggregation function.
